# EUROPEAN PATENT APPLICATION

(11) **EP 4 597 824 A1**
(43) Date of publication of application: **06.08.2025**
(21) Application number: 23871708.6
(22) Date of filing: 31.08.2023
(51) Int. Cl.: H02P 9/08

(54) **INITIAL EXCITATION CIRCUIT AND INITIAL EXCITATION CIRCUIT DIAGNOSIS METHOD**

(30) Priority: 29.09.2022 JP 2022157158
(71) Applicant: Hitachi Construction Machinery Co., Ltd., Tokyo 110-0015 (JP)
(72) Inventor: KURAMOCHI, Yuichi, Tsuchiura-shi, Ibaraki 300-0013 (JP)
(74) Representative: MERH-IP Matias Erny Reichl Hoffmann Patentanwälte PartG mbB
(86) International application number: PCT/JP2023/031749
(87) International publication number: WO 2024/070468

(57) **Abstract**

An initial excitation circuit is electrically coupled to an excitation coil of a power generator and excites the excitation coil at the time of activation of the power generator, and includes an input terminal coupled to a power supply that supplies a direct-current power, an output terminal coupled to the excitation coil via brushes and slip rings included in the power generator, a breaker coupled between the input terminal and the output terminal, and a control circuit that controls the breaker.

## Description

### TECHNICAL FIELD

The present invention relates to an initial excitation circuit for exciting an excitation coil of a power generator at the time of activation of the power generator, and a method of diagnosing the initial excitation circuit.

### BACKGROUND ART

An electric drive system for vehicles is conventionally known, in which an internal combustion engine such as a diesel engine serves as a power source to drive a power generator, and the output generated therefrom is used to drive a motor, thereby producing a propulsive force for allowing a work vehicle to travel (see, for example,

Patent Literature 1).

### CITATION LIST

### PATENT LITERATURE

[PTL 1] Japanese Patent Laid-Open No. 2006-166684

### SUMMARY OF THE INVENTION

### PROBLEM TO BE SOLVED BY THE INVENTION

A brushed three-phase alternating-current power generator may be employed as the power generator mounted in the electric drive system of Patent Literature 1, for example. In this case, an electromotive force generated during power generation excites an excitation coil, which allows the power generator to be kept in a power generation state. When the power generator is to be activated from a stopped state, an electromotive force generated due to the residual magnetic flux excites the excitation coil, thereby bringing the power generator into the power generation state. The amount of residual magnetic flux is unstable, however, and the excitation coil may fail to be excited properly at the time of activation of the power generator. In addition, a contact failure between brushes and slip rings may lead to a failure in excitation of the excitation coil. In such a case, the power generator may become impossible to be activated, hindering the work vehicle from starting travelling.

In view of the above problems, an object of the present invention is to reliably activate a power generator mounted in a work vehicle.

### MEANS TO SOLVE THE PROBLEM

An initial excitation circuit according to the present invention is electrically coupled to an excitation coil of a power generator and excites the excitation coil at the time of activation of the power generator. The initial excitation circuit comprises: an input terminal that is coupled to a power supply that supplies direct-current power; an output terminal that is coupled to the excitation coil via a brush and a slip ring included in the power generator; a breaker that is coupled between the input terminal and the output terminal; and a control circuit that controls the breaker.

A method of diagnosing an initial excitation circuit according to the present invention is a method of diagnosing an initial excitation circuit that is electrically coupled to an excitation coil of a power generator and excites the excitation coil at the time of activation of the power generator. The initial excitation circuit includes: a positive electrode input terminal that is coupled to a positive-electrode side of a power supply that supplies direct-current power; a negative electrode input terminal that is coupled to a negative-electrode side of the power supply; a positive electrode output terminal that is coupled to a one end of the excitation coil via a brush and a slip ring included in the power generator; a negative electrode output terminal that is coupled to another end of the excitation coil via the brush and the slip ring; a first breaker that is coupled between the positive electrode input terminal and the positive electrode output terminal; a second breaker that is coupled between the negative electrode input terminal and the negative electrode output terminal; and a diode that is coupled between the first breaker and the positive electrode output terminal, and has an anode coupled to the first breaker and has a cathode coupled to the positive electrode output terminal. The method comprises: acquiring a first voltage value according to a voltage between the first breaker and the diode and a second voltage value according to a voltage between the second breaker and the negative electrode output terminal; and diagnosing the initial excitation circuit based on the first voltage value and second voltage value acquired.

### ADVANTAGEOUS EFFECT OF THE INVENTION

According to the present invention, a power generator mounted in a work vehicle can be reliably activated.

### BRIEF DESCRIPTION OF THE DRAWINGS

[Figure 1] Figure 1 illustrates a work vehicle having a power generating apparatus according to an embodiment of the present invention.
[Figure 2] Figure 2 is a block diagram of the power generating apparatus according to the embodiment of the present invention.
[Figure 3] Figure 3 is an explanatory diagram concerning an operation of diagnosing an initial excitation circuit.
[Figure 4] Figure 4 is a flowchart illustrating a flow of diagnosis processing performed in the initial excitation circuit.
[Figure 5] Figure 5 is a diagram showing a list of diagnosis contents.
[Figure 6] Figure 6 is a diagram showing a correspondence relationship between diagnosis conditions and diagnosis results for each content of diagnosis.

### DESCRIPTION OF EMBODIMENTS

A power generating apparatus according to an embodiment of the present invention will be described below taking an example where a work vehicle equipped with the power generating apparatus is a mining dump truck.

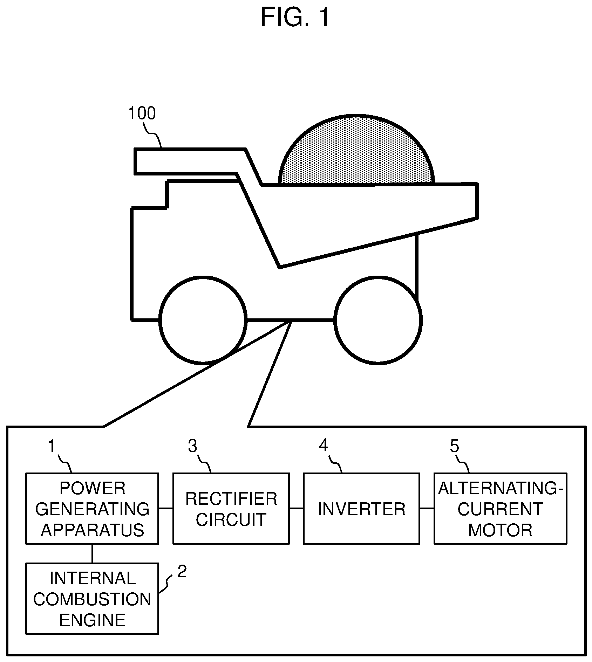

Figure 1 schematically illustrates a work vehicle having the power generating apparatus according to the embodiment of the present invention. A dump truck 100, which serves as the work vehicle, is equipped with a drive system including a power generating apparatus 1, an internal combustion engine 2, a rectifier circuit 3, an inverter 4, and an alternating-current motor 5. The dump truck 100 includes tires driven by the alternating-current motor 5, and further includes a driver's cab, a loading platform (vessel), and a hoist for elevating or lowering the loading platform. The dump truck 100 is used in a mine, for example, to carry excavated materials and waste in the mine.

The power generating apparatus 1 generates electricity by being driven by the internal combustion engine 2, and outputs alternating-current power to the rectifier circuit 3. The internal combustion engine 2 is a diesel engine, for example, and generates driving force through fuel combustion to be transmitted to the power generating apparatus 1, thereby driving the power generating apparatus 1. The rectifier circuit 3 rectifies and converts the alternating-current power input from the power generating apparatus 1 into direct-current power to be output to the inverter 4. The inverter 4 generates alternating-current power of a desired voltage and frequency from the direct-current power input from the rectifier circuit 3 to be output to the alternating-current motor 5. The alternating-current motor 5 is driven by the alternating-current power input from the inverter 4, and generates driving force for allowing the dump truck 100 to travel. With this operation, the dump truck 100 travels.

A secondary battery may be provided between the rectifier circuit 3 and the inverter 4 to temporarily store the direct-current power.

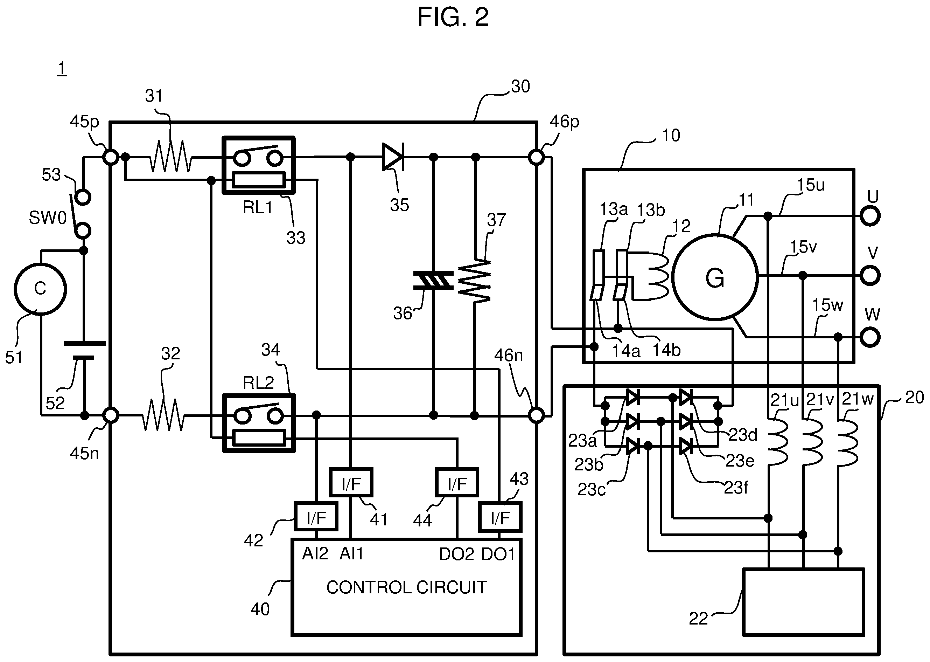

Figure 2 is a block diagram of the power generating apparatus according to the embodiment of the present invention. As illustrated in Figure 2, the power generating apparatus 1 includes a power generator 10, an excitation circuit 20, and an initial excitation circuit 30.

The power generator 10 is a brushed three-phase alternating-current power generator, and includes a stator 11, an excitation coil 12, slip rings 13a and 13b, brushes 14a and 14b, and a U-phase output line 15u, a V-phase output line 15v, and a W-phase output line 15w.

The excitation coil 12 is excited by being energized by direct-current power supplied from the excitation circuit 20 or the initial excitation circuit 30 and generates magnetic flux. The excitation coil 12 is set on a rotator (not illustrated). When the internal combustion engine 2 rotationally drives the rotator, the excitation coil 12 correspondingly rotates and moves inside the stator 11. Accordingly, the amount of magnetic flux interlinking with a stator coil (not illustrated) set in the stator 11 changes and electromotive force is generated in the stator coil, thereby the power generator 10 generates electricity.

The three-phase alternating-current power generated by the power generator 10 is output through the U-phase output line 15u, the V-phase output line 15v, and the W-phase output line 15w. The U-phase output line 15u, the V-phase output line 15v, and the W-phase output line 15w are coupled to the rectifier circuit 3 of Figure 1. Accordingly, the three-phase alternating-current power is output from the power generating apparatus 1 to the rectifier circuit 3, and then converted into direct-current power by the rectifier circuit 3.

Both ends of the excitation coil 12 are coupled to the slip rings 13a and 13b. The slip rings 13a and 13b rotate about a rotational axis, which is common to the slip rings and the rotator, according to the rotational drive of the rotator. The brushes 14a and 14b are electrically coupled to the excitation circuit 20 and the initial excitation circuit 30, and fixedly disposed in the power generator 10 so as to slide in response to the rotation of the slip rings 13a and 13b, respectively. Accordingly, the direct-current power can be supplied from the excitation circuit 20 or the initial excitation circuit 30 to the excitation coil 12 even when the rotator is rotationally driven.

The excitation circuit 20 is a circuit for exciting the excitation coil 12 when the power generator 10 is in a power generation state. The excitation circuit 20 includes reactors 21u, 21v, and 21w, an excitation control circuit 22, and rectifier diodes 23a, 23b, 23c, 23d, 23e, and 23f.

The reactors 21u, 21v, and 21w are coupled to the U-phase output line 15u, the V-phase output line 15v, and the W-phase output line 15w, respectively. The alternating-current power flowing through the U-phase output line 15u, the V-phase output line 15v, and the W-phase output line 15w is partially output to the rectifier diodes 23a to 23f via the reactors 21u, 21v, and 21w.

The rectifier diodes 23a to 23f rectify and convert the alternating-current power input via the reactors 21u, 21v, and 21w into direct-current power to be output to the power generator 10. In the power generator 10, the direct-current power input from the rectifier diodes 23a to 23f is output to the excitation coil 12 via the brushes 14a and 14b and the slip rings 13a and 13b. Accordingly, an excitation current flows through the excitation coil 12 and then the excitation coil 12 is excited in the power generator 10.

The excitation control circuit 22 controls the amount of electric current flowing through each of the reactors 21u, 21v, and 21w. Accordingly, the direct-current power to be output from the rectifier diodes 23a to 23f to the power generator 10 is controlled, and therefore the excitation current flowing through the excitation coil 12 is regulated.

The initial excitation circuit 30 is a circuit for exciting the excitation coil 12 when the power generator 10 is activated from a stopped state. The initial excitation circuit 30 includes resistors 31 and 32, relays 33 and 34, a diode 35, a capacitor 36, a discharging resistor 37, a control circuit 40, interface circuits 41, 42, 43, and 44, a positive electrode input terminal 45p, a negative electrode input terminal 45n, a positive electrode output terminal 46p, and a negative electrode output terminal 46n.

The positive electrode input terminal 45p is coupled to a positive-electrode side of a battery 52 via a power switch 53. The negative electrode input terminal 45n is coupled to a negative-electrode side of the battery 52. The battery 52 is a power supply for supplying direct-current power to the initial excitation circuit 30, and includes a lead storage battery, for example. The battery 52 is coupled to a charger 51, and is appropriately charged by the charger 51. The charger 51 includes, for example, an alternator that generates electricity by being driven by the internal combustion engine 2.

The power switch 53 is a switch for turning on or off the electricity from the battery 52 to the initial excitation circuit 30. The power switch 53 is turned on or off in response to an activation switch (not illustrated) provided in the dump truck 100, for example. That is, when the activation switch of the dump truck 100 is turned on to activate the dump truck 100, the power switch 53 is correspondingly turned on, thereby starting the supply of electricity from the battery 52 to the initial excitation circuit 30. In the following description, the power switch 53 may be abbreviated as "SW0".

The relay 33 has one end coupled to the positive electrode input terminal 45p via the resistor 31, and has the other end coupled to the positive electrode output terminal 46p via the diode 35. The relay 34 has one end coupled to the negative electrode input terminal 45n via the resistor 32, and has the other end coupled to the negative electrode output terminal 46n. The relays 33 and 34 serving as breakers are coupled to the control circuit 40, and are switched by the control circuit 40 to either a conducting state or a cutting-off state, thereby switching the electrical coupling state between the battery 52 and the capacitor 36 and the excitation coil 12. In the following description, the relays 33 and 34 may be abbreviated as "RL1" and "RL2".

When the relays 33 and 34 are switched from the cutting-off state to the conducting state, the direct-current power supplied from the battery 52 is output to the excitation coil 12 via the resistors 31 and 32, the relays 33 and 34, and the diode 35. Accordingly, even when the power generator 10 is in the stopped state, the excitation current flows through the excitation coil 12 in the power generator 10 and thus the excitation coil 12 can be excited. Thereafter, when the power generator 10 is activated and shifts to the power generation state and the supply of electricity from the excitation circuit 20 to the excitation coil 12 is started, the relays 33 and 34 are switched to the cutting-off state in order that the direct-current power of high voltage output from the excitation circuit 20 is prevented from flowing toward the battery 52.

The resistors 31 and 32 are provided for the purpose of restricting the charging current that flows while the capacitor 36 is charged with the relays 33 and 34 switched to the conducting state so that the charging current does not exceed rated currents of the relays 33 and 34 and the diode 35. The diode 35 is provided between the relay 33 and the positive electrode output terminal 46p, and has an anode coupled on the side near the relay 33 and a cathode coupled on the side near the positive electrode output terminal 46p. This prevents the current from reversely flowing from the initial excitation circuit 30 toward the battery 52. The discharging resistor 37 is provided for the purpose of securing safety by causing the capacitor 36 to discharge residual charges at the time when the power generator 10 is stopped.

The control circuit 40 is a circuit for controlling the operation of the initial excitation circuit 30, and includes, for example, an arithmetic processing unit such as a microcomputer. The control circuit 40 includes input terminals AI1 and AI2 and output terminals DO1 and DO2. The input terminals AI1 and AI2 are coupled to the relay 33 on the side near the positive electrode output terminal 46p and to the relay 34 on the side near the negative electrode output terminal 46n via the interface circuits 41 and 42, respectively. The interface circuits 41 and 42 detect the voltage between the relay 33 and the diode 35 and the voltage between the relay 34 and the negative electrode output terminal 46n, convert the detected voltage values to voltage values according to an input voltage characteristic of the control circuit 40, and output the converted voltage values to the input terminals AI1 and AI2, respectively. This allows the control circuit 40 to acquire a voltage value according to the voltage between the relay 33 and the diode 35 and a voltage value according to the voltage between the relay 34 and the negative electrode output terminal 46n at the input terminals AI1 and AI2, respectively, and monitor the voltages.

The output terminals DO1 and DO2 of the control circuit 40 are coupled to the relays 33 and 34 via the interface circuits 43 and 44, respectively. The output terminals DO1 and DO2 output relay switching signals for switching the relays 33 and 34 from the cutting-off state to the conducting state to the interface circuits 43 and 44, respectively. The interface circuits 43 and 44 convert the relay switching signals input from the output terminals DO1 and DO2 into signals suitable for operations of the relays 33 and 34, and output the converted signals to the relays 33 and 34. This allows the control circuit 40 to control the switching operations of the relays 33 and 34 through the relay switching signals output from the output terminals DO1 and DO2.

In general, when a rotator is rotated from the stopped state in a three-phase alternating-current power generator, electromotive force is generated due to the residual magnetic flux. The electromotive force caused by the residual magnetic flux excites an excitation coil, and thereby the power generator can be activated. However, the amount of residual magnetic flux is unstable, and therefore the excitation coil is not necessarily excited properly at the time of activation of the power generator. Furthermore, in the case of a brushed three-phase alternating-current power generator, an accidental contact failure may occur due to formation of oxide films or adherence of foreign substances (contamination) between brushes and slip rings. In such an occasion, the excitation coil may fail to be properly excited even when the rotator is rotated, and in the worst case, the power generator cannot be activated.

In view of the above, the power generating apparatus 1 of the present embodiment includes the initial excitation circuit 30 coupled to the power generator 10, and the control circuit 40 switches the relays 33 and 34 to the conducting state at the time of activation of the power generator 10. With this configuration, the capacitor 36 can be charged due to the direct-current power supplied from the battery 52, and the charges accumulated in the capacitor 36 can reliably excite the excitation coil 12 via the brushes 14a and 14b and the slip rings 13a and 13b.

In the initial excitation circuit 30, in the case where the diode 35 goes wrong due to a short circuit, and at the same time, the relays 33 and 34 cannot be switched to the cutting-off state due to an on-fixation failure, the power-generating potential of the power generator 10 is electrically coupled to the battery 52 via the excitation circuit 20 and the initial excitation circuit 30 after activation of the power generator 10. As a result, the battery 52 and other equipment coupled to the battery 52 may be damaged. To prevent such a situation, the power generating apparatus 1 of the present embodiment includes the initial excitation circuit 30 configured to diagnose itself at the time of activation of the power generator 10, and in the case where abnormality is found, the relays 33 and 34 are forcibly switched to the cutting-off state, thereby the battery 52 and other equipment are protected.

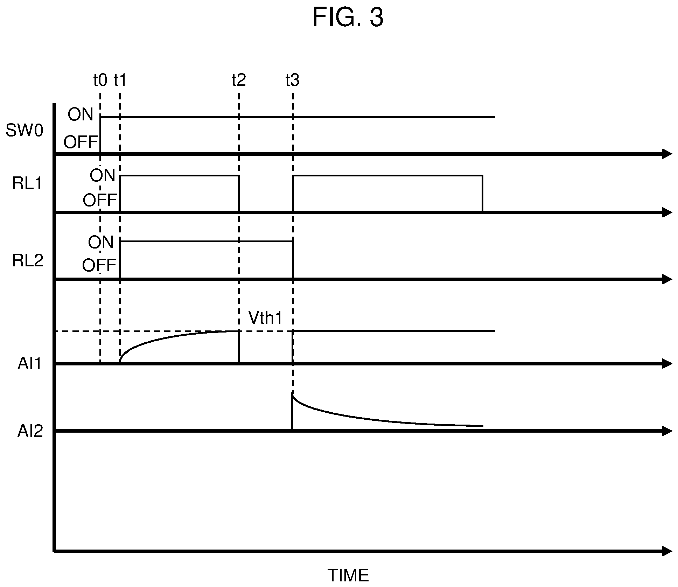

The diagnosis operation of the initial excitation circuit 30 will described below with reference to Figure 3. Figure 3 is an explanatory diagram concerning an operation of diagnosing the initial excitation circuit 30.

When the dump truck 100 equipped with the power generating apparatus 1 is activated, the power switch 53 (SW0) is switched from off to on (time point t0) in order to activate the onboard system including the power generating apparatus 1. Accordingly, the supply of power from the battery 52 to the initial excitation circuit 30 is started, and a direct-current voltage is applied between the positive electrode input terminal 45p and the negative electrode input terminal 45n and the control circuit 40 is activated.

When the activation of the control circuit 40 is completed, the control circuit 40 switches the relays 33 and 34 (RL1 and RL2) from off to on (time point t1). With this operation, charging from the battery 52 to the capacitor 36 is started, and the potential of the diode 35 on the anode side gradually increases. As a result, the voltage of the input terminal AI1 increases at a predetermined time constant after the time point t1, as illustrated in Figure 3. The time constant is defined by the resistance values of the resistors 31 and 32 and the capacitance value of the capacitor 36.

After the capacitor 36 is charged, a direct-current voltage according to the amount of electricity accumulated by the capacitor 36 is applied between the positive electrode output terminal 46p and the negative electrode output terminal 46n. The direct-current voltage is output to the excitation coil 12 via the brushes 14a and 14b and the slip rings 13a and 13b, thereby the excitation coil 12 is excited.

After the voltage of the input terminal AI1 increases enough and exceeds a predetermined threshold Vth1, the coupling between the battery 52 and the capacitor 36 is cut off and the voltage of the input terminal AI1 falls to 0 when the RL1 is switched off with the RL2 kept on (time point t2). Subsequently, when the RL1 is switched on and the RL2 is switched off (time point t3), the voltage of the input terminal AI1 increases again according to the voltage of the battery 52 on the positive-electrode side and returns to the state before the time point t2, and the voltage of the input terminal AI2 increases correspondingly. After the time point t3, the voltage of the input terminal AI2 gradually decreases to 0.

As described above, the voltages of the input terminals AI1 and AI2 change according to the switching states of the RL1 and RL2 in the initial excitation circuit 30. The control circuit 40 can diagnose the initial excitation circuit 30 by monitoring the voltages of the input terminals AI1 and AI2.

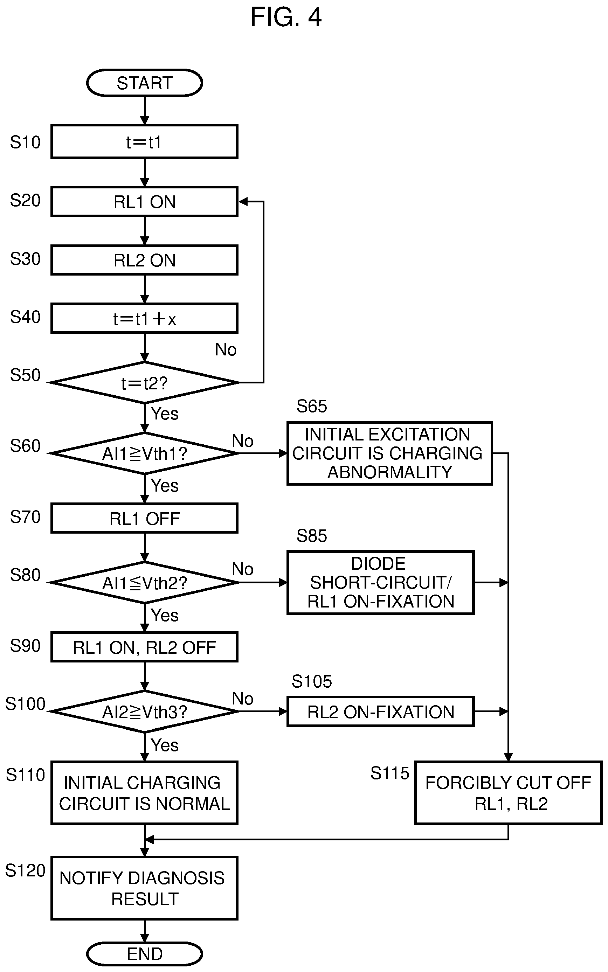

Figure 4 is a flowchart illustrating a flow of diagnosis processing performed in the initial excitation circuit 30. The processing illustrated in the flowchart of Figure 4 is performed by the control circuit 40 of the initial excitation circuit 30 executing a predetermined program, for example.

When the power switch 53 is switched on and activation of the control circuit 40 is completed, the control circuit 40 sets the value of a variable t to the processing starting time point t1 in step S10. In next steps S20 and S30, the control circuit 40 outputs relay switching signals from the output terminals DO1 and DO2 and switches on the RL1 and RL2. With this operation, charging from the battery 52 to the capacitor 36 is started and the potential of the diode 35 on the anode side gradually increases when the initial excitation circuit 30 is normal, as illustrated in Figure 3.

In step S40, the control circuit 40 adds a predetermined value x to the value of the variable t, which is set as t = t1 in step S10. The predetermined value x is a count-up value for determining the time point t2 of Figure 3, and is set in advance according to the cycle of the processing executed by the control circuit 40 illustrated in the flowchart of Figure 4.

In step S50, the control circuit 40 determines whether or not the value of the variable t reaches t2. The time point t2 is a time point when the voltage of the input terminal AI1 exceeds the above-described threshold Vth1 relative to the processing starting time point t1 in the case where the initial excitation circuit 30 is normal, and is set in advance according to the time constant based on the resistance values of the resistors 31 and 32 and the capacitance value of the capacitor 36. In the case where the value of the variable t does not reach t2 as a result of the determination in step S50, the process returns back to step S20 and then the above-described processing is repeated. When t = t2 is satisfied, the process proceeds to next step S60.

In step S60, the control circuit 40 detects the voltage of the input terminal AI1, and determines whether or not the detected voltage is equal to or larger than the threshold Vth1. The threshold Vth1 is set in advance according to the voltage when the battery 52 charges the capacitor 36. Specifically, the threshold Vth1 is set in a range not exceeding a value obtained by subtracting a forward voltage of the diode 35 from a voltage value obtained by division of the output voltage of the battery 52 according to the voltage division ratio among the resistors 31 and 32 and the discharging resistor 37, for example. In the case where the voltage of the input terminal AI1 is equal to or larger than the threshold Vth1 as a result of the determination in step S60, it is determined that the capacitor 36 is normally charged and the process proceeds to step S70. In the case where the voltage of the input terminal AI1 is smaller than the threshold Vth1, it is determined that the capacitor 36 is not normally charged, and the process proceeds to step S65.

In step S65, the control circuit 40 acquires a diagnosis result that an abnormality in the charging of the capacitor 36 occurs due to disconnection or the like in the initial excitation circuit 30 and therefore the capacitor 36 is not sufficiently charged. After step S65, the process proceeds to step S115.

In step S70, the control circuit 40 stops the output of the relay switching signal from the output terminal DO1, which is started in step S20, and switches off RL1. With this operation, the coupling between the battery 52 and the capacitor 36 is cut off and the voltage of the input terminal AI1 falls to approximately 0 when the initial excitation circuit 30 is normal, as described with reference to Figure 3.

In step S80, the control circuit 40 detects the voltage of the input terminal AI1, and determines whether or not the detected voltage is equal to or smaller than a threshold Vth2. The threshold Vth2 is set in advance according to the voltage generated in the diode 35 on the anode side when the coupling between the battery 52 and the capacitor 36 is cut off. In the case where the voltage of the input terminal AI1 is equal to or smaller than the threshold Vth2 as a result of the determination in step S80, it is determined that the coupling between the battery 52 and the capacitor 36 is normally cut off and the process proceeds to step S90. In the case where the voltage of the input terminal AI1 is larger than the threshold Vth2, it is determined that the coupling between the battery 52 and the capacitor 36 is not normally cut off, and the process proceeds to step S85.

In step S85, the control circuit 40 acquires a diagnosis result that a short-circuit failure of the diode 35 or an on-fixation abnormality of the RL1 occurs in the initial excitation circuit 30 and therefore the voltage of the battery 52 or the capacitor 36 is detected on the anode side of the diode 35. After step S85, the process proceeds to step S115.

In step S90, the control circuit 40 resumes the output of the relay switching signal from the output terminal DO1, which is stopped in step S70, and switches on the RL1. In addition, the control circuit 40 stops the output of the relay switching signal from the output terminal DO2, which is started in step S30, and switches off the RL2. With this operation, the voltage of the input terminal AI2 is caused to increase when the initial excitation circuit 30 is normal, as described with reference to the time point t3 of Figure 3.

In step S100, the control circuit 40 detects the voltage of the input terminal AI2, and determines whether or not the detected voltage is equal to or larger than a predetermined threshold Vth3. In the case where the voltage of the input terminal AI2 is equal to or larger than the threshold Vth3 as a result of the determination in step S100, it is determined that the coupling between the battery 52 and the capacitor 36 is normally cut off and the process proceeds to step S110. In the case where the voltage of the input terminal AI2 is smaller than the threshold Vth3, it is determined that the coupling between the battery 52 and the capacitor 36 is not normally cut off, and the process proceeds to step S105.

In step S105, the control circuit 40 acquires a diagnosis result that an on-fixation abnormality of the RL2 occurs in the initial excitation circuit 30. After step S105, the process proceeds to step S115.

In step S110, the control circuit 40 acquires a diagnosis result that the initial excitation circuit 30 is normal. In this case, RL1 and RL2 are switched on again and the initial excitation circuit 30 is started to operate and therefore, at the time of activation of the power generator 10, direct-current power supplied from the battery 52 is output to the excitation coil 12 and the excitation coil 12 is excited. Thereafter, when the supply of electricity from the excitation circuit 20 to the excitation coil 12 is started in response to the activation of the power generator 10, RL1 and RL2 are switched off.

In step S115, the control circuit 40 stops the output of the relay switching signal from each of the output terminals DO1 and DO2 according to the abnormality diagnosis result in step S65, S85, or S105, and forcibly turns off the RL1 and RL2, in order to protect the battery 52 and the other circuits. With this operation, even when the on-fixation of one breaker of the RL1 and RL2 is diagnosed in step S85 or S105, the other breaker is switched to the cutting-off state to reliably cut off the electrical coupling to the battery 52, thereby preventing the power-generating potential of the power generator 10 from transmitting toward the battery 52. However, since the battery 52 can be protected by turning off the RL1 in the case where at least the RL1 and the diode 35 are normal, the operation of the initial excitation circuit 30 may be continued without the process of step S115 after step S105.

In step S120 after the process of step S110 or S115, the control circuit 40 notifies the result of diagnosis of the initial excitation circuit 30 to the outside. Here, for example, the diagnosis result may be transmitted to a display apparatus (not illustrated) mounted in the dump truck 100 and the display apparatus may display the diagnosis result, thereby notifying the result of diagnosis of the initial excitation circuit 30 to a driver of the dump truck 100. Alternatively, for example, the diagnosis result may be output to a transmitting apparatus (not illustrated) mounted in the dump truck 100 and the transmitting apparatus may transmit the diagnosis result to a management center of the dump truck 100, thereby notifying the result of diagnosis of the initial excitation circuit 30 to a manager in the management center. In addition to the above, the result of diagnosis of the initial excitation circuit 30 may be notified to any person by any method.

After performing the process of step S120, the control circuit 40 finishes the diagnosis processing illustrated in the flowchart of Figure 4.

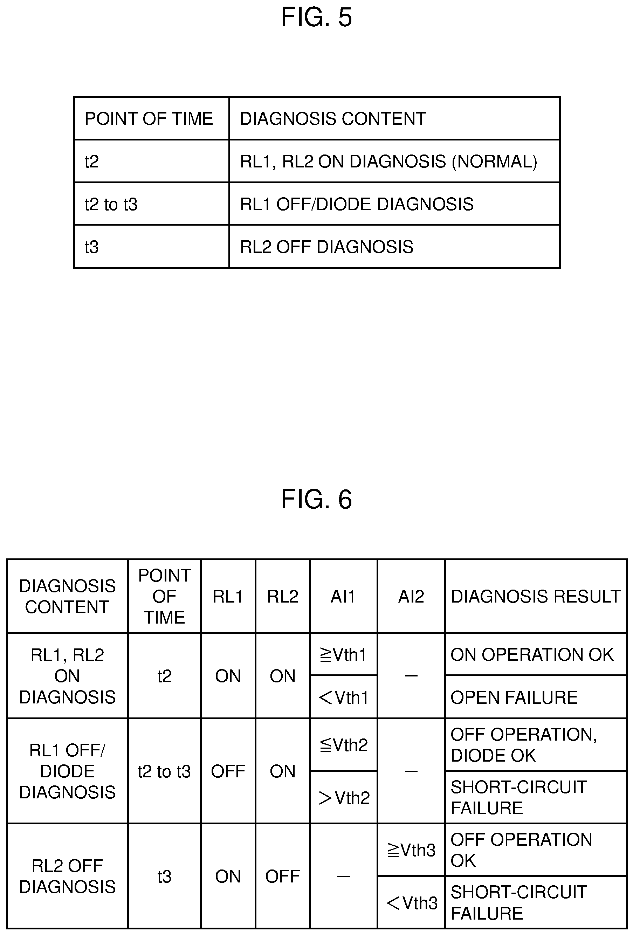

Figure 5 is a diagram showing a list of contents of diagnosis performed by the initial excitation circuit 30. As shown in the table of Figure 5, diagnosis is performed to determine whether or not the RL1 and RL2 are normally switched to the on-state by the process of step S60 of Figure 4 at the time point t2 at which the capacitor 36 has been charged. In the subsequent time period from the time point t2 to the time point t3, diagnosis is performed to determine whether or not the RL1 is normally switched to the off-state and the diode 35 does not suffer a short-circuit failure by the process of step S80 of Figure 4. At the time point t3, diagnosis is performed to determine whether or not the RL2 is normally switched to the off-state by the process of step S100 of Figure 4.

Figure 6 is a diagram showing a correspondence relationship between diagnosis conditions and diagnosis results for each content of diagnosis. In the RL1, RL2 ON diagnosis performed at the time point t2, RL1 and RL2 are switched to the on-state and the voltage of the input terminal AI1 is compared to the threshold Vth1, as shown in the table of Figure 6. As a result, it is diagnosed that the on operations of the RL1 and RL2 are normal in the case where the voltage of the input terminal AI1 is equal to or larger than the threshold Vth1, whereas it is diagnosed that RL1 or RL2 suffers an open failure in the case where the voltage is smaller than the threshold Vth1. In the RL1 OFF diagnosis and the diagnosis of the diode 35 performed in the time period from the time point t2 to the time point t3, the RL1 is switched to the off-state and the RL2 is switched to the on-state, and the voltage of the input terminal AI1 is compared to the threshold Vth2. As a result, it is diagnosed that the off operation of the RL1 and the diode 35 are normal in the case where the voltage of the input terminal AI1 is equal to or smaller than the threshold Vth2, whereas it is diagnosed that the RL1 or the diode 35 suffers a short-circuit failure in the case where the voltage is larger than the threshold Vth2. In the RL2 OFF diagnosis performed at the time point t3, the RL1 is switched to the on-state and the RL2 is switched to the off-state, and the voltage of the input terminal AI2 is compared to the threshold Vth3. As a result, it is diagnosed that the off operation of the RL2 is normal in the case where the voltage of the input terminal AI2 is equal to or larger than the threshold Vth3, whereas it is diagnosed that the RL2 suffers a short-circuit failure in the case where the voltage is smaller than the threshold Vth3.

According to the embodiment of the present invention described above, the following functions and effects can be achieved.
(1) The initial excitation circuit 30 is electrically coupled to the excitation coil 12 of the power generator 10 and excites the excitation coil 12 at the time of activation of the power generator 10. The initial excitation circuit 30 comprises input terminals (the positive electrode input terminal 45p and the negative electrode input terminal 45n) that are coupled to the battery 52 that supplies direct-current power, output terminals (the positive electrode output terminal 46p and the negative electrode output terminal 46n) that are coupled to the excitation coil 12 via the brushes 14a and 14b and the slip rings 13a and 13b included in the power generator 10, breakers (the relays 33 and 34) that are coupled between the input terminals and the output terminals, and the control circuit 40 that controls the breakers. With this configuration, the power generator 10 mounted in the dump truck 100 being a work vehicle can be reliably activated.
(2) The input terminals of the initial excitation circuit 30 include the positive electrode input terminal 45p coupled to the positive-electrode side of the battery 52 and the negative electrode input terminal 45n coupled to the negative-electrode side of the battery 52, the output terminals include the positive electrode output terminal 46p coupled to the one end of the excitation coil 12 and the negative electrode output terminal 4n coupled to the other end of the excitation coil 12. The breaker of the initial excitation circuit 30 includes the relay 33 coupled between the positive electrode input terminal 45p and the positive electrode output terminal 46p and the relay 34 coupled between the negative electrode input terminal 45n and the negative electrode output terminal 46n. With this configuration, the direct current flowing through the excitation coil 12 can be reliably controlled by the initial excitation circuit 30 with use of the direct-current power supplied from the battery 52.
(3) The initial excitation circuit 30 further comprises the diode 35 coupled between the relay 33 and the positive electrode output terminal 46p, and the diode 35 has an anode coupled to the relay 33 and has a cathode coupled to the positive electrode output terminal 46p. This can prevent the current from reversely flowing from the initial excitation circuit 30 toward the battery 52.
(4) The control circuit 40 acquires the voltage value of the input terminal AI1 according to the voltage between the relay 33 and the diode 35 and the voltage value of the input terminal AI2 according to the voltage between the relay 34 and the negative electrode output terminal 46n, and diagnoses the initial excitation circuit 30 based on the voltage values acquired. Specifically, after the relay 33 and the relay 34 are brought into a conducting state (steps S20 and S30) and the excitation coil 12 is caused to conduct electricity, the control circuit 40 diagnoses whether the cutting-off operation of the relay 33 is good or not and whether the diode 35 is good or not based on the voltage value of the input terminal AI1 acquired when the relay 33 is turned off (steps S70 to S85 and S110). In addition, after the relay 33 and the relay 34 are brought into a conducting state (steps S20 and S30) and the excitation coil 12 is caused to conduct electricity, the control circuit 40 diagnoses whether the cutting-off operation of the relay 34 is good or not based on the voltage value of the input terminal AI2 acquired when the relay 34 is turned off (steps S90 to S105 and S110). With this configuration, whether or not the initial excitation circuit 30 operates normally can be reliably diagnosed, and the power generator 10 can be safely activated with use of the initial excitation circuit 30.
(5) In diagnosis of the initial excitation circuit 30, the control circuit 40 diagnoses each of the relays 33 and 34 as to whether or not to have on-fixation, and in the case where one of the relays 33 and 34 is diagnosed to have on-fixation (steps S85 and S105), the control circuit 40 switches the other breaker into a cutting-off state (step S115). With this configuration, even when the relay 33 or the relay 34 goes wrong, the electrical coupling with the battery 52 can be reliably cut off, the power-generating potential of the power generator 10 can be prevented from transmitting to the battery 52.
(6) The control circuit 40 notifies the result of diagnosis of the initial excitation circuit 30 to the outside (step S120). With this configuration, any abnormality of the initial excitation circuit 30 can be promptly notified to a driver or a manager of the dump truck 100.

Although in the above-described embodiment, the initial excitation circuit 30 of the power generating apparatus 1 mounted in the dump truck 100 being a work vehicle is taken as an example, the present invention is not limited thereto. For example, the present invention may be applied to an initial excitation circuit of a power generating apparatus mounted in a work vehicle other than the dump truck or a power generating apparatus to be used for another purpose. Furthermore, although the brushed three-phase alternating-current power generator is described as an example of the power generator 10 coupled to the initial excitation circuit 30, the power generator 10 may be another type of power generator. The present invention may be applied to any initial excitation circuit that is coupled to an excitation coil provided in a brushed power generator and excites the excitation coil at the time of activation of the power generator.

The present invention is not limited to the above-described embodiment, and various modifications can be made without departing from the gist of the present invention.

### REFERENCE SIGNS LIST

1: power generating apparatus, 10: power generator, 11: stator, 12: excitation coil, 13a, 13b: slip ring, 14a, 14b: brush, 15u: U-phase output line, 15v: V-phase output line, 15w: W-phase output line, 20: excitation circuit, 21u, 21v, 21w: reactor, 22: excitation control circuit, 23a, 23b, 23c, 23d, 23e, 23f: rectifier diode, 30: initial excitation circuit, 31, 32: resistor, 33, 34: relay, 35: diode, 36: capacitor, 37: discharging resistor, 40: control circuit, 41, 42, 43, 44: interface circuit, 45p: positive electrode input terminal, 45n: negative electrode input terminal, 46p: positive electrode output terminal, 46n: negative electrode output terminal, 51: charger, 52: battery, 53: power switch

## Claims

1. An initial excitation circuit that is electrically coupled to an excitation coil of a power generator and excites the excitation coil at the time of activation of the power generator, the initial excitation circuit comprising:
an input terminal that is coupled to a power supply that supplies direct-current power;
an output terminal that is coupled to the excitation coil via a brush and a slip ring included in the power generator;
a breaker that is coupled between the input terminal and the output terminal; and
a control circuit that controls the breaker.

2. The initial excitation circuit according to claim 1, wherein
the input terminal includes a positive electrode input terminal coupled to a positive-electrode side of the power supply and a negative electrode input terminal coupled to a negative-electrode side of the power supply,
the output terminal includes a positive electrode output terminal coupled to a one end of the excitation coil and a negative electrode output terminal coupled to another end of the excitation coil, and
the breaker includes a first breaker coupled between the positive electrode input terminal and the positive electrode output terminal and a second breaker coupled between the negative electrode input terminal and the negative electrode output terminal.

3. The initial excitation circuit according to claim 2, further comprising:
a diode coupled between the first breaker and the positive electrode output terminal, wherein
the diode has an anode coupled to the first breaker and has a cathode coupled to the positive electrode output terminal.

4. The initial excitation circuit according to claim 3, wherein
the control circuit acquires a first voltage value according to a voltage between the first breaker and the diode and a second voltage value according to a voltage between the second breaker and the negative electrode output terminal, and diagnoses the initial excitation circuit based on the first voltage value and the second voltage value acquired.

5. The initial excitation circuit according to claim 4, wherein
after the first breaker and the second breaker are brought into a conducting state and the excitation coil is caused to conduct electricity, the control circuit diagnoses whether a cutting-off operation of the first breaker is good or not and whether the diode is good or not based on the first voltage value acquired when the first breaker is turned off.

6. The initial excitation circuit according to claim 4 or 5, wherein
after the first breaker and the second breaker are brought into a conducting state and the excitation coil is caused to conduct electricity, the control circuit diagnoses whether a cutting-off operation of the second breaker is good or not based on the second voltage value acquired when the second breaker is turned off.

7. The initial excitation circuit according to claim 4 or 5, wherein
in diagnosis of the initial excitation circuit, the control circuit diagnoses each of the first breaker and the second breaker as to whether or not to have on-fixation, and in a case where one of the first breaker and the second breaker is diagnosed to have on-fixation, the control circuit switches the other breaker into a cutting-off state.

8. The initial excitation circuit according to claim 4 or 5, wherein
the control circuit notifies a result of diagnosis of the initial excitation circuit to an outside.

9. A method of diagnosing an initial excitation circuit that is electrically coupled to an excitation coil of a power generator and excites the excitation coil at the time of activation of the power generator, the initial excitation circuit including:
a positive electrode input terminal that is coupled to a positive-electrode side of a power supply that supplies direct-current power;
a negative electrode input terminal that is coupled to a negative-electrode side of the power supply;
a positive electrode output terminal that is coupled to a one end of the excitation coil via a brush and a slip ring included in the power generator;
a negative electrode output terminal that is coupled to another end of the excitation coil via the brush and the slip ring;
a first breaker that is coupled between the positive electrode input terminal and the positive electrode output terminal;
a second breaker that is coupled between the negative electrode input terminal and the negative electrode output terminal; and
a diode that is coupled between the first breaker and the positive electrode output terminal, and has an anode coupled to the first breaker and has a cathode coupled to the positive electrode output terminal,
the method comprising:
acquiring a first voltage value according to a voltage between the first breaker and the diode and a second voltage value according to a voltage between the second breaker and the negative electrode output terminal; and
diagnosing the initial excitation circuit based on the first voltage value and the second voltage value acquired.

10. The method of diagnosing the initial excitation circuit according to claim 9, wherein
after the first breaker and the second breaker are brought into a conducting state and the excitation coil is caused to conduct electricity, the first voltage value is acquired when the first breaker is turned off, and
whether a cutting-off operation of the first breaker is good or not and whether the diode is good or not are diagnosed based on the first voltage value acquired.

11. The method of diagnosing the initial excitation circuit according to claim 9 or 10, wherein
after the first breaker and the second breaker are brought into a conducting state and the excitation coil is caused to conduct electricity, the second voltage value is acquired when the second breaker is turned off, and
whether a cutting-off operation of the second breaker is good or not is diagnosed based on the second voltage value acquired.

12. The method of diagnosing the initial excitation circuit according to claim 9 or 10, wherein
in diagnosis of the initial excitation circuit, each of the first breaker and the second breaker is diagnosed as to whether or not to have on-fixation, and in a case where one of the first breaker and the second breaker is diagnosed to have on-fixation, the other breaker is switched into a cutting-off state.

13. The method of diagnosing the initial excitation circuit according to claim 9 or 10, wherein
a result of diagnosis of the initial excitation circuit is notified to an outside.
